# EUROPEAN PATENT APPLICATION

(11) **EP 4 550 367 A1**
(43) Date of publication of application: **07.05.2025**
(21) Application number: 24841094.6
(22) Date of filing: 08.01.2024
(51) Int. Cl.: H01F 7/02, H01F 27/34

(54) **MAGNET, ELECTRONIC DEVICE AND CHARGING DEVICE**

(30) Priority: 31.08.2023 CN 202311125661
(71) Applicant: Huawei Technologies Co., Ltd., Shenzhen, Guangdong 518129 (CN)
(72) Inventor: WANG, Chao, Shenzhen Guangdong 518129 (CN); LI, Yuechao, Shenzhen Guangdong 518129 (CN); WANG, Zhao, Shenzhen Guangdong 518129 (CN)
(74) Representative: Huawei European IPR
(86) International application number: PCT/CN2024/071149
(87) International publication number: WO 2025/044028

(57) **Abstract**

This application provides a magnet, an electronic device, and a charging device. The magnet includes a first sub-magnet and a second sub-magnet. A direction of a magnetic line inside the first sub-magnet and a direction of a magnetic line inside the second sub-magnet each are inclined toward a plane on which the magnet is located. More magnetic lines may be aggregated in space at one side of the magnet, and magnetic lines are sparse around the magnet. In this application, a distribution of magnetic lines of the magnet is changed, a magnet of a smaller volume can be used to generate a stronger attraction force or a stronger repulsion force, fewer materials are used to manufacture the magnet, and the magnet has smaller adverse impact on surrounding electronic components. The magnet can be assembled in an electronic device with limited accommodation space. The magnet has wide application scenarios and helps reduce resources for manufacturing the magnet, such as a rare earth element.

## Description

This application claims priority to Chinese Patent Application No. 202311125661.2, filed with the China National Intellectual Property Administration on August 31, 2023 and entitled "MAGNET, ELECTRONIC DEVICE, AND CHARGING DEVICE", which is incorporated herein by reference in its entirety.

### TECHNICAL FIELD

This application relates to the field of terminal device hardware, and specifically, to a magnet, an electronic device, and a charging device.

### BACKGROUND

With development and progress of computer software and hardware technologies, more functions are integrated into electronic devices such as mobile phones and tablet computers. Hundreds of electronic components need to be accommodated inside an electronic device with limited accommodation space, and each electronic component may occupy increasingly smaller space. A plurality of electronic components that are closely arranged may further affect each other due to electromagnetic induction and the like. This is not conducive to normal running of the electronic device.

A magnet is a necessary component for implementing functions such as magnetic charging of the electronic device. How to control a volume of the magnet and reduce space occupied by the magnet on a premise of providing a sufficiently strong magnetic attraction force is a problem worth considering.

### SUMMARY

This application provides a magnet. A direction of a magnetic line inside the magnet is inclined toward a plane on which the magnet is located. Magnetic lines at a side that is of the magnet and that is used to generate an interaction force with another magnet are denser. The magnet with a smaller volume can provide a stronger magnetic attraction force, and has smaller impact on magnetic sensitive components at a back and a side of the magnet.

According to a first aspect, a magnet is provided. The magnet includes: a plurality of magnet units. The plurality of magnet units are arranged in a ring shape. The magnet unit includes a first magnet subunit and a second magnet subunit. The first magnet subunit and the second magnet subunit are relatively fastened. A first magnetic pole of the first magnet subunit is adjacent to a second magnetic pole of the second magnet subunit. The first magnetic pole and the second magnetic pole are opposite. Both the first magnetic pole and the second magnetic pole are disposed close to a same face of the magnet. A direction of a magnetic line inside the first magnet subunit is inclined toward a plane on which the magnet is located, and a direction of a magnetic line inside the second magnet subunit is inclined toward the plane on which the magnet is located.

In some scenarios, the direction of the magnetic line inside the first magnet subunit may also be understood as a magnetization direction inside the first magnet subunit, and the direction of the magnetic line inside the second magnet subunit may also be understood as a magnetization direction inside the second magnet subunit.

It should be noted that, that the direction of the magnetic line is inclined toward the plane on which the magnet is located should be understood as that the direction of the magnetic line is neither perpendicular to the plane on which the magnet is located nor parallel to the plane on which the magnet is located.

In some scenarios, that the direction of the magnetic line is inclined toward the plane on which the magnet is located may alternatively be understood as that the direction of the magnetic line is inclined toward a normal direction of the plane on which the magnet is located.

Directions of magnetic lines inside the first magnet subunit and the second magnet subunit are obliquely disposed, and magnetic poles that are of the first magnet subunit and the second magnet subunit and that are close to each other are oppositely disposed. In this way, more magnetic lines may be aggregated at a side of a working face of the magnet. When the working face of the magnet is used to attract or repulse another magnet, compared with a magnet in which a magnetic line is not obliquely disposed, the magnet provided in this technical solution can generate a stronger interaction force with the another magnet. From another perspective, when generated interaction forces are equal, the magnet provided in this technical solution has a smaller volume, and occupies smaller space when the magnet is accommodated in an electronic device.

In addition, in this technical solution, the plurality of magnet units are included in the magnet in the ring shape. In different application scenarios, the plurality of magnet units may have different assembly manners. This technical solution helps improve scenario applicability of the magnet provided in this application.

With reference to the first aspect, in some implementations of the first aspect, an included angle between the direction of the magnetic line inside the first magnet subunit and the plane on which the magnet is located is α, and an included angle between the direction of the magnetic line inside the second magnet subunit and the plane on which the magnet is located is β. 30≤α<90°, and 30≤β<90°.

The first magnet subunit and the second magnet subunit within a tilt angle range provided in this technical solution can generate stronger magnetic field strength at the side of the working face, and the magnetic lines are distributed more densely.

With reference to the first aspect, in some implementations of the first aspect, α=β.

A tilt angle of the magnetic line inside the first magnet subunit is disposed to be the same as a tilt angle of the magnetic line inside the second magnet subunit. After a magnetic field generated by the first magnet subunit and a magnetic field generated by the second magnet subunit are superposed, magnetic lines around the magnet are sparser. When the magnet is installed in the electronic device, the magnet has smaller adverse impact on surrounding electronic components.

With reference to the first aspect, in some implementations of the first aspect, the first magnet subunit includes a first contact face and a first exposed face that are oppositely disposed, the second magnet subunit includes a second contact face and a second exposed face that are oppositely disposed, the first contact face and the second contact face are adjacently disposed, the first exposed face is disposed away from the second contact face, and the second exposed face is disposed away from the first contact face. A distance between the first contact face and the first exposed face is equal to a distance between the second contact face and the second exposed face.

In this technical solution, a relationship between shapes of the first magnet subunit and the second magnet subunit is further limited, to further reduce distribution density of the magnetic lines around the magnet, and further reduce adverse impact of the magnet on the surrounding electronic components.

With reference to the first aspect, in some implementations of the first aspect, the magnet unit is of a non-mirror-symmetrical structure.

In a possible implementation, the magnet unit includes a connection wall. Two connection walls of two adjacent magnet units in the plurality of magnet units are adjacent. The connection wall includes a first connection wall and a second connection wall that are oppositely disposed, and the first connection wall and the second connection wall are not mirror-symmetrical.

In a possible implementation, the magnet unit includes a working face and a connection face that are oppositely disposed, and the working face and the connection face are not mirror-symmetrical.

In a possible implementation, the magnet unit includes an exposed face and a contact face that are oppositely disposed, and the exposed face and the connection face are not mirror-symmetrical.

In a possible implementation, the first connection wall of the magnet unit is coated with a first coating, the second connection wall is coated with a second coating, and the first coating and the second coating are in different colors.

The magnet unit of the non-mirror-symmetrical structure is disposed. In a process of forming the magnet by using the magnet units, an installation sequence of the magnet units can be quickly determined based on the shape, thereby helping improve assembly efficiency of the magnet units.

With reference to the first aspect, in some implementations of the first aspect, the magnet unit includes the connection wall. Two connection walls of two adjacent magnet units in the plurality of magnet units are adjacent. The connection wall includes the first connection wall and the second connection wall that are oppositely disposed, and a first end of the first connection wall is provided with a first reverse angle.

In a possible implementation, the first reverse angle may be a chamfer or a fillet.

With reference to the first aspect, in some implementations of the first aspect, a second end of the first connection wall is provided with a second reverse angle, or a second end of the second connection wall is provided with a second reverse angle. The first end and the second end are two ends of the magnet unit that are oppositely disposed.

In a possible implementation, the second reverse angle may be a chamfer or a fillet.

In this technical solution, the installation sequence of the magnet units is determined based on reverse angles of the magnet units. The reverse angles are easily identified through visual recognition or image recognition, thereby facilitating automatic assembly of the magnet units.

With reference to the first aspect, in some implementations of the first aspect, the magnet unit includes the connection wall. Two connection walls of two adjacent magnet units in the plurality of magnet units are adjacent. The connection wall includes the first connection wall and the second connection wall that are oppositely disposed, and a plane on which the first connection wall is located intersects a plane on which the second connection wall is located.

In a possible implementation, this technical solution may also be understood as that a tilt angle of the plane on which the first connection wall is located is different from a tilt angle of the plane on which the second connection wall is located.

In this technical solution, a magnet unit of another asymmetric structure is provided. Compared with a manner of providing a reverse angle, this technical solution helps simplify a processing process of the magnet unit and obtain a magnet unit structure of a non-mirror-symmetrical structure, thereby improving preparation efficiency of the magnet unit.

With reference to the first aspect, in some implementations of the first aspect, a spacing is disposed between at least two adjacent magnet units in the plurality of magnet units.

In a possible implementation, the magnet may include one or more spacings.

The spacing is disposed between the magnet units, so that a connection line between an electronic component located inside a region enclosed by the magnet and an electronic component located outside the region enclosed by the magnet or the like may be accommodated at the spacing. Implementation of this technical solution helps accommodate the magnet in the electronic device with limited accommodation space, and helps apply the magnet to different electronic devices.

With reference to the first aspect, in some implementations of the first aspect, the magnet further includes a spacing unit. The spacing unit is located between two adjacent magnet units, and a magnetic line direction of the spacing unit and a magnetic line direction of the magnet unit at a same side of the magnet are different.

In a possible implementation, the spacing unit and the magnet unit are in a same shape.

In a possible implementation, the spacing unit includes a first spacing subunit and a second spacing subunit. A shape of the first spacing subunit is the same as a shape of the first magnet subunit, and a shape of the second spacing subunit is the same as a shape of the second magnet subunit. A tilt degree of a magnetic line inside the first spacing subunit is the same as a tilt degree of the magnetic line inside the second magnet subunit, and a tilt degree of a magnetic line inside the second spacing subunit is the same as a tilt degree of the magnetic line inside the first magnet subunit.

Spacing units with different magnetic line directions are disposed between two adjacent magnet units. When the magnet is used to perform attraction or repulsion with another magnet, because directions of magnetic lines generated by the magnet unit and the spacing unit are different, types of interaction forces between the magnet unit and the spacing unit and the another magnet are different. Such magnet provided with different structural units can select a fitting angle between two magnets that interact with each other to some extent.

With reference to the first aspect, in some implementations of the first aspect, the magnet further includes a backplane, the first magnetic pole and the second magnetic pole are disposed close to a connection face of the magnet, the backplane may be fastened to the connection face of the magnet, and the backplane may be made of a material whose magnetic permeability is greater than a preset threshold.

In some possible implementations, the connection face and the working face are two oppositely disposed faces of the magnet.

In a possible implementation, the backplane may be made of a ferro-magnetic material or a soft magnetic material.

In this technical solution, the backplane made of the ferro-magnetic material or the soft magnetic material is connected to the connection face of the magnet. Because the magnet attracts the backplane, the backplane can relatively fasten the first magnet subunit and the second magnet subunit to some extent. Because the backplane is made of the ferro-magnetic material or the soft magnetic material, a magnetic line at a side of the connection face of the magnet is preferentially closed by using the backplane with a smaller magnetic resistance. Therefore, disposing the backplane also helps weaken an external magnetic field at the side of the connection face of the magnet to some extent, enhance a magnetic field of the working face, and increase a magnetic attraction force.

According to a second aspect, a magnet is provided. The magnet is in a ring shape. The magnet includes a first sub-magnet and a second sub-magnet that are in a ring shape. The first sub-magnet is sleeved on an outer side of the second sub-magnet. The first sub-magnet and the second sub-magnet are relatively fastened. A first magnetic pole of the first sub-magnet is adjacent to a second magnetic pole of the second sub-magnet. The first magnetic pole and the second magnetic pole are opposite. Both the first magnetic pole and the second magnetic pole are disposed close to a same face of the magnet. A direction of a magnetic line inside the first sub-magnet is inclined toward a plane on which the magnet is located, and a direction of a magnetic line inside the second sub-magnet is inclined toward the plane on which the magnet is located.

In some scenarios, the direction of the magnetic line inside the first sub-magnet may also be understood as a magnetization direction inside the first sub-magnet, and the direction of the magnetic line inside the second sub-magnet may also be understood as a magnetization direction inside the second sub-magnet.

It should be noted that, that the direction of the magnetic line is inclined toward the plane on which the magnet is located should be understood as that the direction of the magnetic line is neither perpendicular to the plane on which the magnet is located nor parallel to the plane on which the magnet is located.

In some scenarios, that the direction of the magnetic line is inclined toward the plane on which the magnet is located may alternatively be understood as that the direction of the magnetic line is inclined toward a normal direction of the plane on which the magnet is located.

Directions of magnetic lines inside the first sub-magnet and the second sub-magnet are obliquely disposed, and magnetic poles that are of the first sub-magnet and the second sub-magnet and that are close to each other are oppositely disposed. In this way, more magnetic lines may be aggregated at a side of a working face of the magnet. When the working face of the magnet is used to attract or repulse another magnet, compared with a magnet in which a magnetic line is not obliquely disposed, the magnet provided in this technical solution can generate a stronger interaction force with the another magnet. From another perspective, when generated interaction forces are equal, the magnet provided in this technical solution has a smaller volume, and occupies smaller space when the magnet is accommodated in an electronic device.

With reference to the second aspect, in some implementations of the second aspect, an included angle between the direction of the magnetic line inside the first sub-magnet and the plane on which the magnet is located is α, and an included angle between the direction of the magnetic line inside the second sub-magnet and the plane on which the magnet is located is β. 30≤α<90°, and 30≤β<90°.

The first sub-magnet and the second sub-magnet within a tilt angle range provided in this technical solution can generate stronger magnetic field strength at the side of the working face, and the magnetic lines are distributed more densely.

With reference to the second aspect, in some implementations of the second aspect, α=β.

A tilt angle of the magnetic line inside the first sub-magnet is disposed to be the same as a tilt angle of the magnetic line inside the second sub-magnet. After a magnetic field generated by the first sub-magnet and a magnetic field generated by the second sub-magnet are superposed, magnetic lines around the magnet are sparser. When the magnet is installed in the electronic device, the magnet has smaller adverse impact on surrounding electronic components.

With reference to the second aspect, in some implementations of the second aspect, a width of the first sub-magnet is equal to a width of the second sub-magnet.

In some scenarios, that a width of the first sub-magnet is equal to a width of the second sub-magnet may also be understood as that a difference between an outer diameter and an inner diameter of the first sub-magnet is equal to a difference between an outer diameter and an inner diameter of the second sub-magnet.

In this technical solution, a relationship between shapes of the first sub-magnet and the second sub-magnet is further limited, to further reduce distribution density of the magnetic lines around the magnet, and further reduce adverse impact of the magnet on the surrounding electronic components.

With reference to the second aspect, in some implementations of the second aspect, the magnet includes at least one notch.

The notch is disposed in the magnet in the ring shape, so that a connection line between an electronic component located inside a region enclosed by the magnet and an electronic component located outside the region enclosed by the magnet or the like may be accommodated at the spacing. Implementation of this technical solution helps accommodate the magnet in the electronic device with limited accommodation space, and helps apply the magnet to different electronic devices.

With reference to the second aspect, in some implementations of the second aspect, the magnet includes a plurality of first magnetic portions and a plurality of second magnetic portions that are spaced apart, and a magnetic line direction of the first magnetic portion and a magnetic line direction of the second magnetic portion at a same side of the magnet are different.

Because the first magnetic portions and the second magnetic portions are alternately distributed, and the magnetic line direction of the first magnetic portion and the magnetic line direction of the second magnetic portion at the same side of the magnet are different, and a same coupled magnet generates an attraction force with the first magnetic portion and generates a repulsion force with the second magnetic portion. In this way, the two different magnetic portions that are alternately distributed can select an angle for interaction between two magnets when the coupled magnet interacts with another magnet.

With reference to the second aspect, in some implementations of the second aspect, the magnet further includes a backplane, the first magnetic pole and the second magnetic pole are disposed close to a connection face of the magnet, the backplane may be fastened to the connection face of the magnet, and the backplane is made of a material whose magnetic permeability is greater than a preset threshold.

In some possible implementations, the connection face and the working face are two oppositely disposed faces of the magnet.

In a possible implementation, the backplane may be made of a ferro-magnetic material or a soft magnetic material.

In this technical solution, the backplane made of the ferro-magnetic material or the soft magnetic material is connected to the connection face of the magnet. The backplane can relatively fasten the first sub-magnet and the second sub-magnet to some extent. Because the backplane is made of a material having specific magnetic permeability, a magnetic line at a side of the connection face of the magnet is preferentially closed by using the backplane with a smaller magnetic resistance. Therefore, disposing the backplane also helps enhance density of magnetic lines or strength of a magnetic field at the side of the connection face of the magnet to some extent.

According to a third aspect, an electronic device is provided, including: a charging coil, a mainboard, and the magnet according to any one of the first aspect or the second aspect and the possible implementations of the first aspect or the second aspect. The charging coil is located in a region enclosed by the magnet, and the charging coil is electrically connected to the mainboard.

According to a fourth aspect, a charging device is provided, including: a charging coil, a circuit board, and the magnet according to any one of the first aspect or the second aspect and the possible implementations of the first aspect or the second aspect. The charging coil is located in a region enclosed by the magnet, and the charging coil is electrically connected to the circuit board.

In a possible implementation, the charging device further includes a cover and a housing. The cover covers the housing. The charging coil, the circuit board, and the magnet are accommodated in the housing.

According to a fifth aspect, a magnetic bracket is provided, including the magnet according to any one of the first aspect or the second aspect and the possible implementations of the first aspect or the second aspect.

According to a sixth aspect, a housing is provided, including the magnet according to any one of the first aspect or the second aspect and the possible implementations of the first aspect or the second aspect.

### BRIEF DESCRIPTION OF DRAWINGS

FIG. 1 to FIG. 4 show magnetic line distributions of two strip magnets arranged in different forms;
FIG. 5 is a diagram of a first magnet according to an embodiment of this application;
FIG. 6 is a diagram of an AA cross section of the first magnet in FIG. 5;
FIG. 7 is a diagram of a distribution of magnetic lines around the first magnet in FIG. 5;
FIG. 8 and FIG. 9 show first magnets of two possible shapes;
FIG. 10 to FIG. 17 are diagrams of a combined magnet obtained by assembling first magnets as structural units;
FIG. 18 and FIG. 19 show first magnets of other two possible shapes;
FIG. 20 is a diagram of a combined magnet obtained by assembling the first magnet in FIG. 18 as a structural unit;
FIG. 21 is a diagram of a combined magnet obtained by assembling the first magnet in FIG. 19 as a structural unit;
FIG. 22 shows a first magnet in still another possible shape;
FIG. 23 is a diagram of a combined magnet obtained by assembling the first magnet in FIG. 22 as a structural unit;
FIG. 24 to FIG. 27 are diagrams of a first magnet in a ring shape;
FIG. 28 is a diagram of a first magnet provided with a backplane;
FIG. 29 is a diagram of a magnet ring pair according to an embodiment of this application;
FIG. 30 is a diagram of a radial cross section of the magnet ring pair in FIG. 29;
FIG. 31 is a diagram of another magnet ring pair according to an embodiment of this application;
FIG. 32 is a diagram of a radial cross section of the magnet ring pair in FIG. 31;
FIG. 33 is a diagram of still another magnet ring pair according to an embodiment of this application;
FIG. 34 is a diagram of a radial cross section of the magnet ring pair in FIG. 33;
FIG. 35 is a diagram of a wireless charging cradle including a first magnet according to an embodiment of this application; and
FIG. 36 is a diagram of an electronic device including a first magnet according to an embodiment of this application.

### DESCRIPTION OF EMBODIMENTS

The following describes embodiments of this application in detail. Examples of embodiments of this application are shown in the accompanying drawings. In the accompanying drawings, same or similar reference numerals indicate same or similar elements or elements having same or similar functions. The following embodiments described with reference to the accompanying drawings are examples, and are merely used to explain this application, but cannot be understood as a limitation on this application.

Unless otherwise defined, a technical term or a scientific term used herein should have a general meaning understood by a person of ordinary skill in the art of this application. In descriptions of this application, it should be understood that a direction or a location relationship indicated by terms such as "center", "longitudinal", "transverse", "upper", "lower", "front", "back", "left", "right", "vertical", "horizontal", "top", "bottom", "inside", or "outside" is a direction or a location relationship shown based on the accompanying drawings, is merely used to facilitate descriptions of this application and simplify the descriptions, but is not intended to indicate or imply that an indicated apparatus or element needs to have a particular direction, needs to be constructed and operated in a particular direction, and therefore cannot be construed as a limitation on this application.

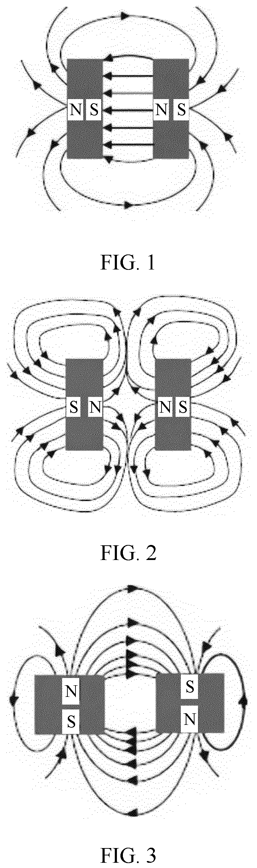

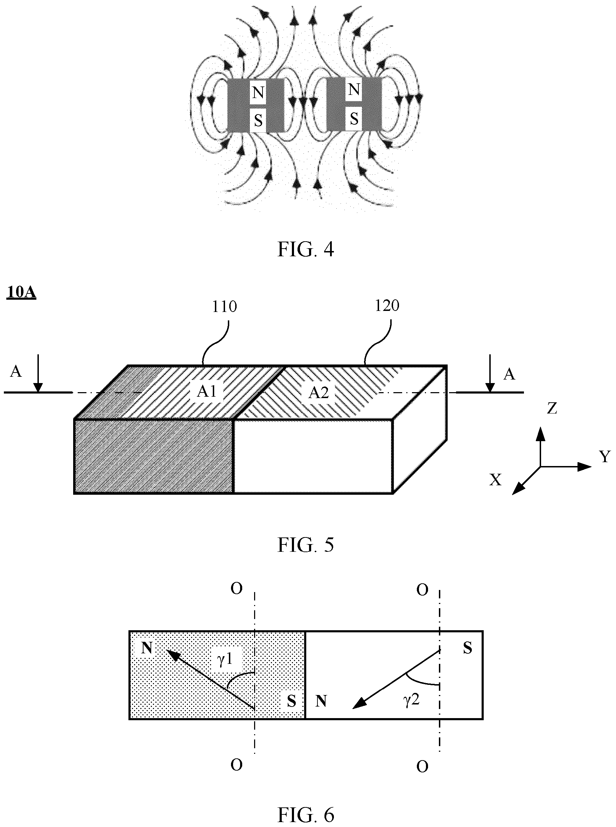

FIG. 1 to FIG. 4 show several magnetic field distributions after combination of two strip magnets. FIG. 1 shows a magnetic line distribution when different polarities of the two strip magnets face each other. FIG. 2 shows a magnetic line distribution when same polarities of the two strip magnets face each other. FIG. 3 shows a magnetic line distribution when different polarities of the two strip magnets are parallel. FIG. 4 shows a magnetic line distribution when same polarities of the two strip magnets are parallel. It can be seen from the figures that the two magnets are surrounded by magnetic lines. When these magnets are used in an electronic device, magnetic fields around the magnets have adverse impact on normal operation of electronic components at various locations around the magnets. In addition, because the magnetic fields generated by the magnets are dispersed, magnetic lines in main working directions of the magnets are not sufficiently aggregated, and working performance of the magnets is limited.

To improve a distribution of a magnetic field generated by a magnet, reduce adverse impact of the magnetic field on running of surrounding electronic components, and improve working performance of the magnet, this application provides a first magnet 10. A direction of a magnetic line inside the magnet is inclined toward a normal direction of a plane on which the magnet is located. More magnetic lines may be aggregated in upper space or lower space of the plane on which the magnet is located. In a same case, an interaction force generated between the magnet and another magnet is greater.

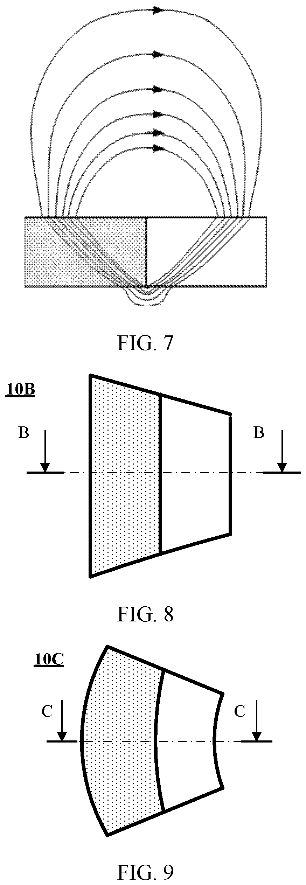

FIG. 5 is a diagram of a structure of a first magnet 10A. FIG. 6 is a diagram of an AA cross section of the first magnet 10A. FIG. 7 is a diagram of a magnetic line distribution around the first magnet 10A.

The first magnet 10A includes a first sub-magnet 110 and a second sub-magnet 120, and the first sub-magnet 110 and the second sub-magnet 120 are adjacently disposed. A direction of a magnetic line inside the first sub-magnet 110 is inclined toward a normal direction (an OO direction in FIG. 6) of a plane on which the first magnet 10A is located. In other words, an included angle between the direction of the magnetic line inside the first sub-magnet 110 and the normal direction of the plane on which the first magnet 10A is located is γ1, where 0<γ1<90°.

The foregoing description related to the direction of the magnetic line inside the first sub-magnet 110 may also be understood as that a magnetization direction on an AA cross section of the first sub-magnet 110 is at an acute angle to the plane on which the first magnet 10A is located, or the magnetization direction on the AA cross section of the first sub-magnet 110 is at an included angle of (90°-γ1) to the plane on which the first magnet 10A is located, where 0<γ1<90°.

A direction of a magnetic line inside the second sub-magnet 120 is inclined toward the normal direction (the OO direction in FIG. 6) of the plane on which the first magnet 10A is located. In other words, an included angle between the direction of the magnetic line inside the second sub-magnet 120 and the normal direction of the plane on which the first magnet 10A is located is γ2, where 0<γ2<90°.

The foregoing description related to the direction of the magnetic line inside the second sub-magnet 120 may also be understood as that a magnetization direction on an AA cross section of the second sub-magnet 120 is at an acute angle to the plane on which the first magnet 10 is located, or the magnetization direction on the AA cross section of the second sub-magnet 120 is at an included angle of (90°-γ2) to the plane on which the first magnet 10 is located, where 0<γ2<90°.

With reference to FIG. 7, magnetic lines around the first magnet 10A are mainly aggregated in upper space of an upper surface of the first magnet 10A, and the upper surface of the first magnet 10A may also be referred to as a working face of the first magnet 10A. In some examples, N and S polarities in adjacent regions of the first sub-magnet 110 and the second sub-magnet 120 on the working face (or referred to as an attraction face or a repulsion face) of the first magnet 10A are opposite. In other words, in FIG. 5, an N or S polarity in an A1 region of the first sub-magnet 110 and an N or S polarity in an A2 region of the second sub-magnet 120 are opposite. Still in other words, magnetic poles of the first sub-magnet 110 and the second sub-magnet 120 that are opposite to each other are adjacently disposed, and are disposed close to a same face of the first magnet 10A.

In some examples, an upper left corner of the first sub-magnet 110 is represented as an N pole attribute, and a lower right corner of the first sub-magnet 110 is represented as an S pole attribute.

In some examples, an upper right corner of the second sub-magnet 120 is represented as an S pole attribute, and a lower left corner of the second sub-magnet 120 is represented as an N pole attribute.

To improve a distribution status of magnetic lines of the first magnet 10A in space, and distribute fewer magnetic lines around the first magnet 10A and more magnetic lines in the upper space and/or lower space of the first magnet 10A, in some examples, the included angle γ1 is equal to the included angle γ2.

In some examples, an included angle between the direction of the magnetic line inside the first sub-magnet 110 and the direction of the magnetic line inside the second sub-magnet 120 is 180°-(γ1+γ2). For example, the direction of the magnetic line inside the first sub-magnet 110 points to the working face, and the direction of the magnetic line inside the second sub-magnet 120 points to another face opposite to the working face.

Similarly, to improve the distribution status of the magnetic lines of the first magnet 10A in space, a shape and a size of the first sub-magnet 110 may be basically consistent with a shape and a size of the second sub-magnet 120.

In some examples, a length of the first sub-magnet 110 may be equal to a length of the second sub-magnet 120, that is, the first sub-magnet 110 and the second sub-magnet 120 have an equal size in an X-axis direction in FIG. 5.

In some examples, a width of the first sub-magnet 110 may be equal to a width of the second sub-magnet 120, that is, the first sub-magnet 110 and the second sub-magnet 120 have an equal size in a Y-axis direction in FIG. 5.

In some examples, a height of the first sub-magnet 110 may be equal to a height of the second sub-magnet 120, that is, the first sub-magnet 110 and the second sub-magnet 120 have an equal size in a Z-axis direction in FIG. 5.

Because the shape and the size of the first sub-magnet 110 are basically consistent with the shape and the size of the second sub-magnet 120, superposition of magnetic lines generated by the first sub-magnet 110 and magnetic lines generated by the second sub-magnet 120 results in a sparser distribution of the magnetic lines around the first magnet 10A and a denser distribution of the magnetic lines in the upper space and/or the lower space of the first magnet 10A. In this way, when the working face of the first magnet 10A is used to interact with another magnet, an interaction force generated between the first magnet 10A and the another magnet is stronger, and the first magnet 10 has smaller adverse impact on normal running of surrounding electronic components.

From another perspective, in the foregoing solution, a direction of a magnetic line inside the first magnet 10A is changed, that is, a magnetization direction inside the first magnet 10A is changed, so that more magnetic lines can be aggregated in space corresponding to the working face of the first magnet 10A, the first magnet 10A having fewer materials and a smaller volume can generate a magnetic line distribution similar to that generated by a magnet having more materials and a larger volume, thereby reducing occupied space of the first magnet and reducing material costs of the first magnet.

In different application scenarios, the first magnet may further have other different shapes. Correspondingly, the first sub-magnet 110 and the second sub-magnet 120 included in the first magnet may also have different shapes. FIG. 8 and FIG. 9 are top views of first magnets of two different shapes as examples.

As shown in FIG. 8, a first magnet 10B may be in a truncated pyramid shape, a first sub-magnet 110 and a second sub-magnet 120 are also truncated pyramids, and the first sub-magnet 110 and the second sub-magnet 120 jointly form the first magnet 10B. The cross section shown in FIG. 6 may be considered as a BB cross section of an isosceles trapezoid in FIG. 8.

For example, in FIG. 8, a left isosceles trapezoid is the first sub-magnet 110, and a right isosceles trapezoid is the second sub-magnet 120. The first sub-magnet 110 is connected to the second sub-magnet 120. A contact face between the first sub-magnet 110 and the second sub-magnet 120 may be referred to as a first contact face, and a contact face between the second sub-magnet 120 and the first sub-magnet 110 may be referred to as a second contact face. In some examples, shapes and sizes of the first contact face and the second contact face are consistent.

An outer surface of the first sub-magnet 110 adjacent to the first contact face may be referred to as a side wall of the first sub-magnet 110, another outer surface of the first sub-magnet 110 opposite to the first contact face may be referred to as a first exposed face of the first sub-magnet 110, and the first contact face and the first exposed face may be respectively considered as an upper bottom face and a lower bottom face of the first sub-magnet 110. Similarly, an outer surface of the second sub-magnet 120 adjacent to the second contact face may be referred to as a side wall of the second sub-magnet 120, another outer surface of the second sub-magnet 120 opposite to the second contact face may be referred to as a second exposed face of the second sub-magnet 120, and the second exposed face and the second contact face may be respectively considered as an upper bottom face and a lower bottom face of the second sub-magnet 120.

In some examples, two included angles between the first contact face of the first sub-magnet 110 and a plane on which the side wall is located are respectively equal to two included angles between the second contact face of the second sub-magnet 120 and a plane on which the side wall is located. In other words, the side wall of the first sub-magnet 110 and the side wall of the second sub-magnet 120 smoothly transit at a location at which the side wall of the first sub-magnet 110 and the side wall of the second sub-magnet 120 are connected.

In some examples, the first exposed face, the first contact face, the second contact face, and the second exposed face of the first magnet 10B may be disposed in parallel.

In some examples, shapes of the first sub-magnet 110 and the second sub-magnet 120 may be basically consistent. For example, a width of the first sub-magnet 110 may be equal to a width of the second sub-magnet 120. In other words, in FIG. 8, a distance between the first contact face and the first exposed face of the first sub-magnet 110 is equal to a distance between the second contact face and the second exposed face of the second sub-magnet 120.

As shown in FIG. 9, a first magnet 10C may be in an axisymmetrical sector ring shape, a first sub-magnet 110 and a second sub-magnet 120 are also axisymmetrical sector rings, and the first sub-magnet 110 and the second sub-magnet 120 jointly form the first magnet 10C. The cross section shown in FIG. 6 may be a CC cross section of a sector ring in FIG. 9.

In FIG. 9, a left sector ring may be considered as the first sub-magnet 110, and a right sector ring may be considered as the second sub-magnet 120. The first sub-magnet 110 is connected to the second sub-magnet 120. A contact face between the first sub-magnet 110 and the second sub-magnet 120 may be referred to as a first contact face, and a contact face between the second sub-magnet 120 and the first sub-magnet 110 may be referred to as a second contact face.

In some examples, shapes and sizes of the first contact face and the second contact face are consistent. In other words, the first sub-magnet 110 in the sector ring shape is located on an outer side of the second sub-magnet 120 in the sector ring shape. A cambered face of the first sub-magnet 110 close to the second sub-magnet 120 may be referred to as a first inner wall, and a cambered face of the first sub-magnet 110 away from the second sub-magnet 120 may be referred to as a first outer wall. A cambered face of the second sub-magnet 120 close to the first sub-magnet 110 may be referred to as a second outer wall, and a cambered face of the second sub-magnet 120 away from the first sub-magnet 110 may be referred to as a second inner wall. Shapes and sizes of the first inner wall and the second outer wall are equal.

In some examples, shapes of the first sub-magnet 110 and the second sub-magnet 120 may be basically consistent. For example, a width of the first sub-magnet 110 is equal to a width of the second sub-magnet 120. In other words, in FIG. 9, a difference between an outer diameter and an inner diameter of a sector ring corresponding to the first sub-magnet 110 is equal to a difference between an outer diameter and an inner diameter of a sector ring corresponding to the second sub-magnet 120.

In some examples, the first magnet 10A in a cuboid shape shown in FIG. 5, the first magnet 10B in a truncated pyramid shape shown in FIG. 8, and the first magnet 10C in a sector ring shape shown in FIG. 9 are used as structural units for splicing, to obtain different spliced shapes.

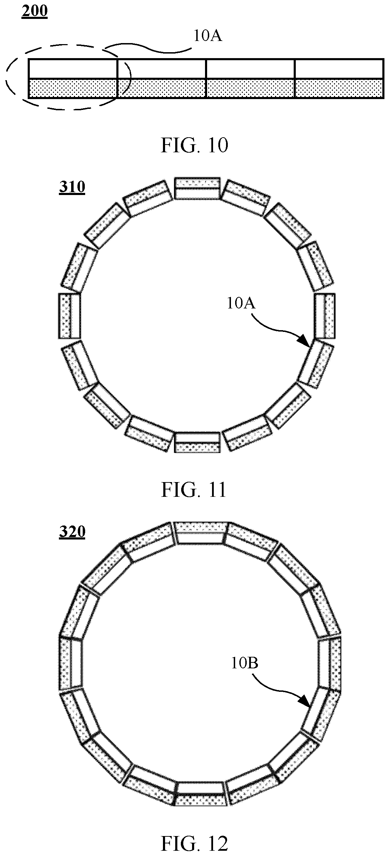

As shown in FIG. 10 and FIG. 11, the first magnets 10A in a cuboid shape are used as structural units, and may be spliced into a first magnet group 200 in a strip shape or a second magnet group 310 in a polygon shape. When a length of the cuboid is short, the second magnet group 310 in the polygon shape shown in FIG. 11 may be in an approximately ring shape.

In some examples, a plurality of first magnets 10A may be spliced into an approximately non-closed ring shape. In other words, a notch may be disposed in the second magnet group 310 in the approximately ring shape shown in FIG. 11. For example, the non-closed ring may be in an axisymmetrical shape.

In some examples, a plurality of first magnets 10A may be inconsecutively axisymmetrically distributed to form a magnet group, and the magnet group may include an even quantity or an odd quantity of first magnets 10A.

As shown in FIG. 12, the first magnets 10B in a truncated pyramid shape are used as structural units, and may be spliced into a third magnet group 320 in a polygon shape. When a size of an isosceles trapezoid is small, the third magnet group 320 in the polygon shape shown in FIG. 12 is in an approximately ring shape.

In some examples, a plurality of first magnets 10B may be spliced into an approximately non-closed ring shape. In other words, a notch may be disposed in the third magnet group 320 in the approximately ring shape shown in FIG. 12. For example, the non-closed ring may be in an axisymmetrical shape.

In some examples, a plurality of first magnets 10B may be inconsecutively axisymmetrically distributed to form a magnet group, and the magnet group may include an even quantity or an odd quantity of first magnets 10B.

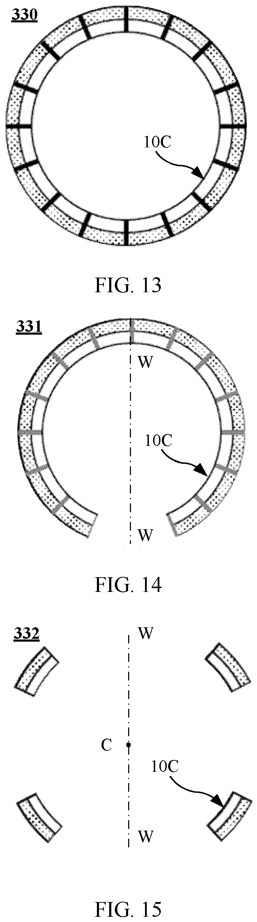

As shown in FIG. 13, first magnets 10C in a sector ring shape are used as structural units, and may be spliced into a fourth magnet group 330 in a ring shape.

In some examples, a plurality of first magnets 10C may be spliced into an approximately non-closed ring shape, that is, a fifth magnet group 331 shown in FIG. 14. For example, the fifth magnet group 331 may be axisymmetrical about a symmetry axis WW.

In some examples, the plurality of first magnets 10C may be inconsecutively axisymmetrically distributed to form a sixth magnet group 332 shown in FIG. 15. The sixth magnet group 332 may include an even quantity or an odd quantity of first magnets 10C, and the plurality of first magnets 10C may be axisymmetrically distributed about the symmetry axis WW. Similarly, for example, the plurality of first magnets 10C may alternatively be centrosymmetrically distributed, for example, with respect to a symmetrical central point C in FIG. 15.

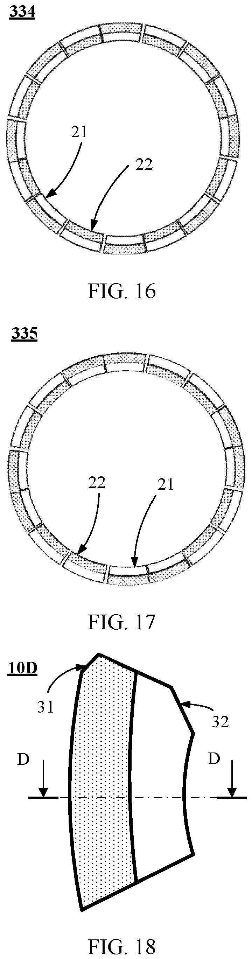

Because the combined magnets in an approximately ring shape in FIG. 11 to FIG. 13 are combined by first magnets of a same type, distributions of magnetic lines at all locations on the ring are basically consistent. In some examples, first magnets of a same shape but different properties are used as structural units, and may be combined to form rings with different magnetic line distribution statuses at different locations on a ring face. FIG. 16 and FIG. 17 provide two examples.

Combined magnets in ring shapes in FIG. 16 and FIG. 17 include two structural units of a same shape but different properties: a first structural unit 21 and a second structural unit 22. The first structural unit 21 and the second structural unit 22 have a similar shape to the first magnet 10C in the sector ring shape.

The first structural unit 21 includes a first structural subunit and a second structural subunit. The first structural subunit is located on an outer side of the second structural subunit, and both the first structural subunit and the second structural subunit are in an approximately sector ring shape. A shape of the first structural subunit and a direction of an internal magnetic line are consistent with the shape of the first sub-magnet 110 and the direction of the internal magnetic line in FIG. 9, and a shape of the second structural subunit and a method of an internal magnetic line are consistent with the shape of the second sub-magnet 120 and the direction of the internal magnetic line in FIG. 9. For related descriptions of the first structural subunit and the second structural subunit, refer to related content in FIG. 9. For brevity, details are not described herein again.

The second structural unit 22 includes a third structural subunit and a fourth structural subunit. The third structural subunit is located on an outer side of the fourth structural subunit, and both the third structural subunit and the fourth structural subunit are in an approximately sector ring shape. A shape of the third structural subunit is consistent with the shape of the first sub-magnet 110 in FIG. 9, and a direction of a magnetic line inside the third structural subunit is consistent with the direction of the magnetic line inside the second sub-magnet 120 in FIG. 9. A shape of the fourth structural subunit is consistent with the shape of the second sub-magnet 120 in FIG. 9, and a direction of a magnetic line inside the fourth structural subunit is consistent with the direction of the magnetic line inside the first sub-magnet 110 in FIG. 9. For related descriptions of the third structural subunit and the fourth structural subunit, refer to related content in FIG. 9. For brevity, details are not described herein again.

In FIG. 16, the first structural unit 21 and the second structural unit 22 are alternately arranged to form a seventh magnet group 334. In FIG. 17, a combined magnet ring is assembled in an arrangement manner in which two first structural units 21 are spaced by two second structural units 22, to form an eighth magnet group 335. In some examples, a direction of a magnetic line in upper space of a working face of the first structural unit 21 faces a first direction, and a magnetic direction in upper space of a working face of the second structural unit 22 is away from the first direction.

In the structure of a magnet group in a ring shape formed in an assembly and arrangement manner shown in FIG. 16 or FIG. 17, magnetic lines in different directions on a ring face of the magnet ring are alternately distributed. When the magnet group and another magnet in a ring shape are used for mutual repulsion or attraction, the first structural unit 21 and the another magnet show an attraction force, the second structural unit 22 and the same magnet show a repulsion force, and the combined magnet ring interacts with the another magnet, the two structural units with opposite magnetic line directions can select an angle for the two magnets to fit with each other to some extent.

Because magnetic poles corresponding to two oppositely disposed sides or faces of the first magnet are different, for a first magnet that is in a mirror-symmetrical shape, such as the cuboid shape, the truncated pyramid shape, or the mirror-symmetrical sector ring shape, in a process of splicing and assembling a plurality of magnets, magnetic poles or an installation sequence of the first magnets cannot be correctly determined based on only shapes of the first magnets, and assembly efficiency of the first magnets is low. To improve splicing and assembly efficiency of the first magnets, the first magnets in non-mirror-symmetrical shapes may be assembled as structural units. FIG. 18, FIG. 19, and FIG. 22 are main views of some first magnets in non-mirror-symmetrical shapes as examples.

In some examples, a fillet or a chamfer is separately disposed on different portions of two sub-magnets of the first magnet 10C in a sector ring shape, and a splicing sequence of the first magnets 10C may be determined based on locations of reverse angles.

FIG. 18 is a diagram of a first magnet 10D. A first reverse angle 31 may be disposed near a connection location between a first outer wall and a side wall of a first sub-magnet 110 located at a left side, and a second reverse angle 32 may be disposed near a connection location between a second inner wall and a side wall of a second sub-magnet 120 located at a right side. The first reverse angle 31 and the second reverse angle 32 may be located on a side wall at a same side of the first magnet 10D.

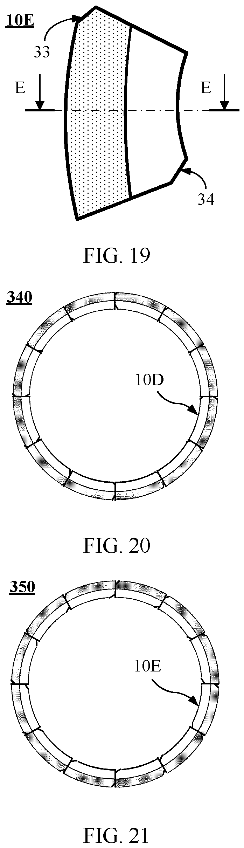

FIG. 19 is a diagram of a first magnet 10E. A third reverse angle 33 may be disposed near a connection location between a first outer wall and a side wall of a first sub-magnet 110 located at a left side, and a fourth reverse angle 34 may be disposed near a connection location between a second inner wall and a side wall of a second sub-magnet 120 located at a right side. The third reverse angle 33 and the fourth reverse angle 34 may be located on side walls at different sides of the first magnet 10E.

An actual assembly process is performed according to a splicing and assembly rule that reverse angles of two adjacent first magnets are not in contact, that is, according to a splicing and assembly rule that "a reverse angle" and "a non-reverse angle" are spaced away from each other. Therefore, efficiency of splicing and assembling a plurality of first magnets can be greatly improved.

FIG. 20 shows a ninth magnet group 340 that is in an approximately ring shape and that is formed by splicing and assembling the first magnets 10D in FIG. 18. FIG. 21 shows a tenth magnet group 350 that is in an approximately ring shape and that is formed by splicing and assembling the first magnets 10E in FIG. 19. A first sub-magnet ring located on an outer side of the ninth magnet group 340 and the tenth magnet group 350 is obtained by splicing first sub-magnets 110 located in the first magnets 10D or the first magnets 10E, and a second sub-magnet ring located on an inner side of the magnet groups is obtained by splicing second sub-magnets 120 located in the first magnets 10D or the first magnets 10E.

In some examples, two side walls of first magnets with different tilt angles may be disposed, so that an installation sequence of the first magnets can be determined based on different side walls.

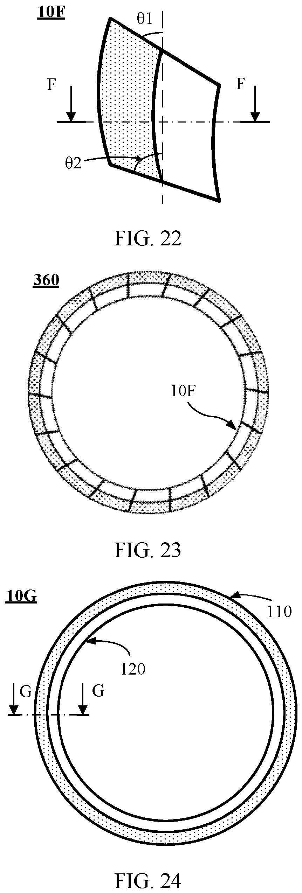

As shown in FIG. 22, a connection line between midpoints of two side walls of a first magnet 10F is used as a reference line. An included angle formed between a first side wall of the first magnet 10F and the reference line is θ1. An included angle formed between a second side wall of the first magnet 10F and the reference line is θ2. The included angle θ1 and the included angle θ2 may respectively reflect a tilt degree of the first side wall and a tilt degree of the second side wall. In a process of manufacturing the first magnet 10F, a difference between the two included angles may be appropriately increased, to increase a difference between the tilt degree of the first side wall and the tilt degree of the second side wall, reduce a probability that an installation sequence of the first magnet 10F is reversed, and improve efficiency of splicing and assembling a plurality of first magnets 10F.

It should be understood that the difference between the tilt degrees of the first side wall and the second side wall may alternatively be described by using another reference line or reference plane. For example, a central plane determined by using a middle line of a lower bottom face on the first magnet 10F is used as a reference plane, and included angles between the first side wall and the reference plane and between the second side wall and the reference plane are separately observed, to determine the tilt degrees of the first side wall and the second side wall.

In an actual assembly process, the plurality of first magnets 10F are spliced in a manner in which two side walls with different tilt degrees of two adjacent magnets press against each other, to obtain an eleventh magnet group 360 in an approximately ring shape shown in FIG. 23.

The foregoing merely lists some first magnets with asymmetric structures as examples. It should be understood that first magnets may alternatively be of more other asymmetric structures. For example, a working face and a connection face of the first magnet are two asymmetric faces, a reverse angle is disposed at a joint between an exposed face and the working face of the first magnet, a reverse angle is disposed at a joint between a contact face and the connection face of the first magnet, and a left side wall and a right side wall of the first magnet are coated with coatings in different colors. This is not limited in this application.

In the eleventh magnet group 360 shown in FIG. 23, first sub-magnets 110 in the first magnets 10F are connected to each other to form a first sub-magnet ring on an outer side of a combined magnet, and second sub-magnets 120 in the first magnets 10F are connected to each other to form a second sub-magnet ring on an inner side of the combined magnet.

As shown in FIG. 24, in some examples, a first magnet 10G may be in a ring shape. A first sub-magnet 110 and a second sub-magnet 120 included in the first magnet 10G may also be in a ring shape. The first sub-magnet 110 is located on an outer side of the second sub-magnet 120, and an inner radius of the first sub-magnet 110 is equal to an outer radius of the second sub-magnet 120.

In some examples, shapes of the first sub-magnet 110 and the second sub-magnet 120 may be basically consistent. For example, a width of the first sub-magnet 110 in the ring shape is equal to a width of the second sub-magnet 120 in the ring shape. The cross section shown in FIG. 6 may be a GG cross section of the first magnet in the ring shape in FIG. 24 in a direction of a diameter of a ring.

In some examples, the first magnet 10G in the ring shape may include a plurality of first magnetic portions and a plurality of second magnetic portions that are spaced apart, and directions of magnetic lines of the first magnetic portion and the second magnetic portion at one side of the first magnet 10G are opposite. A structure of the first magnetic portion may be similar to a structure of the first structural unit 21 shown in FIG. 16 or FIG. 17, and a structure of the second magnetic portion may be similar to a structure of the second structural unit 22 shown in FIG. 16 or FIG. 17. For brevity, details are not described herein again.

Magnetic lines in different directions on a ring face of the magnet ring are alternately distributed. When the first magnet 10G in the ring shape and another magnet in a ring shape are used for mutual repulsion or attraction, the first magnetic portion and the another magnet show an attraction force, the second magnetic portion and the same magnet show a repulsion force, and the combined magnet ring interacts with the another magnet, the two magnetic portions with opposite magnetic line directions can select an angle for interaction.

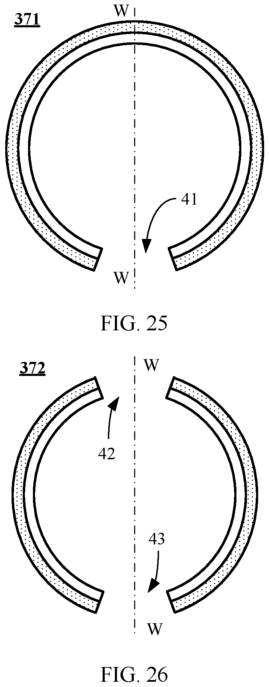

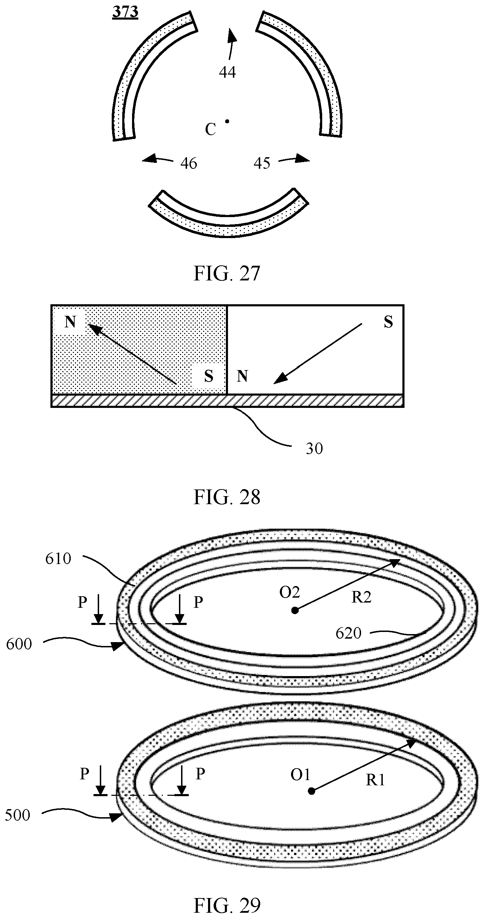

One or more notches may be disposed in the first magnet 10G in the ring shape. For example, as shown in FIG. 25, a first notch 41 is disposed in the first magnet 10G in the ring shape. As shown in FIG. 26, the following two axisymmetrically distributed notches may be disposed in the first magnet 10G in the ring shape: a second notch 42 and a third notch 43. In other words, the first magnet 10G in the ring shape may include two axisymmetrically distributed sector rings. As shown in FIG. 27, the following three centrosymmetrically distributed notches may be disposed in the first magnet 10G in the ring shape: a fourth notch 44, a fifth notch 45, and a sixth notch 46. In other words, the first magnet 10G in the ring shape may include three centrosymmetrical sector rings.

The first magnet 10G in the ring shape may be prepared according to an integrated molding process. One or more notches disposed in the first magnet 10G may be configured to connect an internal region enclosed by the first magnet 10G in the ring shape and an external region. For example, the one or more notches may be configured to accommodate a line connecting an electronic component located in the internal region of the first magnet 10G and an electronic component outside the first magnet 10G or the like.

As shown in FIG. 28, a backplane 30 may be disposed in the foregoing first magnets of various types, and the backplane 30 may be configured to relatively fasten the first sub-magnet 110 and the second sub-magnet 120 in the first magnet.

In some examples, the backplane 30 may be disposed on a face with sparse magnetic lines of the first magnet. In other words, the face with sparse magnetic lines of the first magnet may be fastened to the backplane 30. In this case, locations of the first sub-magnet 110 and the second sub-magnet 120 that form the first magnet are also relatively fastened.

A shape of the backplane 30 may be determined based on a shape of the first magnet. In some examples, the first magnet is in a ring shape, or a plurality of first magnets may form a ring shape, a polygon shape, or the like. A width of the backplane 30 in the ring shape should be slightly greater than a width of the first magnet, so that a projection of the first magnet in the plane on which the backplane 30 is located can fall within a range of the backplane 30. For example, the first magnet is the cuboid shown in FIG. 5, and the backplane may also be a cuboid plate structure.

In some examples, the backplane 30 may alternatively be made of a material whose magnetic permeability is greater than a preset threshold, for example, a ferro-magnetic material or a soft magnetic material. In this way, a magnetic line emitted by the first magnet may be preferentially closed by using the magnetically conductive backplane 30 with a smaller magnetic resistance, thereby helping weaken a magnetic field at one side of the backplane 30, enhancing a magnetic field of a working face, and helping increase an interaction force between the first magnet and another magnet.

FIG. 29 to FIG. 34 are diagrams of structures and corresponding cross sections of several magnet ring pairs according to embodiments of this application. The magnet ring pair includes a first magnet ring and a second magnet ring that fit with each other. There may be a mutual attraction force between the first magnet ring and the second magnet ring, or there may be a mutual repulsion force between the first magnet ring and the second magnet ring. The following describes an example in which the two magnet rings are attracted to each other.

A structure of at least one of the first magnet ring and the second magnet ring is similar to the structure of the first magnet in the ring shape or the magnet group in the ring shape formed by the plurality of first magnets in the foregoing embodiments, thereby helping enhance the interaction force between the two magnet rings. Structures of first magnet rings in FIG. 29 to FIG. 34 are basically similar. The following first describes the structures of the first magnet rings.

As shown in FIG. 29, the structure of the first magnet ring 500 is similar to that of the first magnet 10G in the ring shape in the foregoing embodiment. The first magnet ring 500 includes a first sub-magnet ring and a second sub-magnet ring. The first sub-magnet ring is located on an outer side of the second sub-magnet ring, and an inner wall of the first sub-magnet ring is in contact with an outer wall of the second sub-magnet ring. In other words, an inner diameter of the first sub-magnet ring is basically equal to an outer diameter of the second sub-magnet ring.

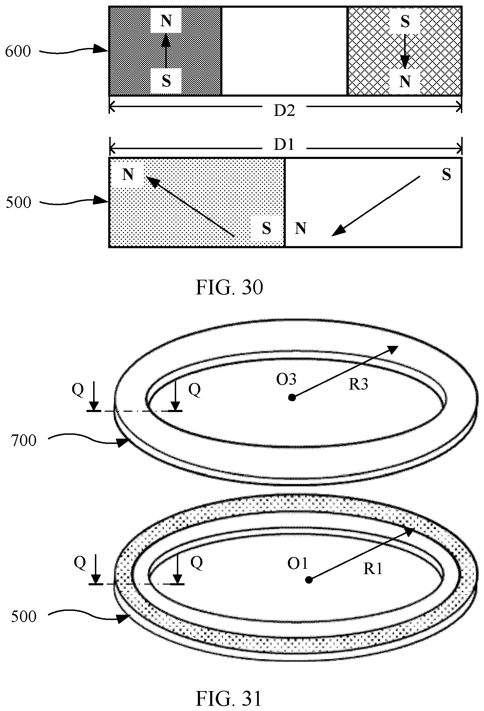

A PP cross section of the first magnet ring 500 in a radial direction is shown in FIG. 30. A rectangle at a left side corresponds to a cross section of the first sub-magnet ring, and a rectangle at a right side corresponds to a cross section of the second sub-magnet ring. Directions of arrows in the two rectangles may respectively indicate a direction of a magnetic line inside the first sub-magnet ring and a direction of a magnetic line inside the second sub-magnet ring. The direction of the magnetic line inside the first sub-magnet ring is inclined toward an axial direction of the first magnet ring 500. In other words, the direction of the magnetic line inside the first sub-magnet ring is inclined toward a normal direction of a plane on which the first magnet ring 500 is located. The direction of the magnetic line inside the second sub-magnet ring is inclined toward an axial direction of the first magnet ring 500. In other words, the direction of the magnetic line inside the second sub-magnet ring is inclined toward a normal direction of a plane on which the first magnet ring 500 is located.

For example, an included angle between the direction of the magnetic line inside the first sub-magnet ring and the axial direction of the first magnet ring 500 is α1, and an included angle between the direction of the magnetic line inside the second sub-magnet ring and the axial direction of the first magnet ring 500 is α2. In this case, a value range of α1 is 0<α1<90°, and a value range of α2 is 0<α2<90°.

To further improve a distribution of magnetic lines of the first magnet ring 500, and increase an interaction force between the first magnet ring 500 and the second magnet ring 600, a value range of α1 may be set to 0<α1≤60°, for example, 15°, 30°, 45°, or 60°. A value range of α2 may be set to 0<α2≤60°, for example, 15°, 30°, 45°, or 60°.

Magnetic poles at two sides of a contact face of the first sub-magnet ring and the second sub-magnet ring may be opposite, so that more magnetic lines can be distributed near a face of the first magnet ring 500 close to the second magnet ring 600. For example, an S pole of the first sub-magnet ring may be adjacent to or in contact with an N pole of the second sub-magnet ring, or an N pole of the first sub-magnet ring may be adjacent to or in contact with an S pole of the second sub-magnet ring.

Adjusting a relationship between the direction of the magnetic line inside the first sub-magnet ring and the direction of the magnetic line inside the second sub-magnet ring can further improve the distribution of the magnetic lines of the first magnet ring 500, and increase the interaction force between the first magnet ring 500 and the second magnet ring 600. For example, there may be a specific difference between the included angle α1 and the included angle α2. For example, α1-α2=σ, and a value range of σ is -5°≤σ≤5°, for example, -5°, -3°, 0°, 3°, or 5°.

In some examples, a width of the first sub-magnet ring may be equal to a width of the second sub-magnet ring. In other words, widths of the two rectangles at the left side and the right side of the cross section of the first magnet ring 500 are equal. The width of the first sub-magnet ring is set to be equal to the width of the second sub-magnet ring, so that magnetic lines of the first sub-magnet ring and magnetic lines of the second sub-magnet ring that are located at an inner side and an outer side of the first magnet ring 500 can counteract each other as far as possible, and magnetic lines of the first sub-magnet ring located at a face of the first magnet ring 500 close to the second magnet ring 600 and the magnetic lines of the second sub-magnet ring can be superimposed. Therefore, an interaction force between the first magnet ring 500 and the second magnet ring 600 can be enhanced.

In some examples, a third sub-magnet ring may be further disposed between the first sub-magnet ring and the second sub-magnet ring. A direction of a magnetic line inside the third sub-magnet ring may be in the radial direction of the first magnet ring 500. In other words, the direction of the magnetic line inside the third sub-magnet ring may be perpendicular to the normal direction of the plane on which the first magnet ring 500 is located. An N pole in the third sub-magnet ring may be disposed close to an S pole of the first sub-magnet ring, and an S pole in the third sub-magnet ring may be disposed close to an N pole of the second sub-magnet ring.

In some examples, the first magnet ring 500 may further include a fourth sub-magnet ring and a fifth sub-magnet ring. The fourth sub-magnet ring may be located on an outer side of the fifth sub-magnet ring. An inner wall of the fourth sub-magnet ring is in contact with an outer wall of the fifth sub-magnet ring. An outer wall of the fourth sub-magnet ring is in contact with an inner wall of the second sub-magnet ring. In other words, the first magnet ring 500 may be considered as a concentric ring structure formed by sequentially nesting the first sub-magnet ring, the second sub-magnet ring, the fourth sub-magnet ring, and the fifth sub-magnet ring.

A structure of the fourth sub-magnet ring is similar to a structure of the first sub-magnet ring, and a structure of the fifth sub-magnet ring is similar to a structure of the second sub-magnet ring. For the structure of the fourth sub-magnet ring and the structure of the fifth sub-magnet ring, refer to the descriptions related to the structure of the first sub-magnet ring and the structure of the second sub-magnet ring. For brevity, details are not described herein again.

A structure of a coupled magnet ring interacting with the first magnet ring 500 may be determined based on a type of interaction between the two magnet rings. In some examples, there is a mutual attraction force between the first magnet ring 500 and the coupled magnet ring.

FIG. 29 and FIG. 30 further show a structure of a second magnet ring 600 coupled to the first magnet ring 500 and a radial cross section thereof. The second magnet ring 600 may include a sixth sub-magnet ring 610 and a seventh sub-magnet ring 620. The sixth sub-magnet ring 610 is located at an outer side of the seventh sub-magnet ring 620, and the sixth sub-magnet ring 610 and the seventh sub-magnet ring 620 are spaced apart. In other words, an inner diameter of the sixth sub-magnet ring 610 is greater than an outer diameter of the seventh sub-magnet ring 620. In other words, a spacing region may be disposed between the sixth sub-magnet ring 610 and the seventh sub-magnet ring 620, and the spacing region may also be referred to as a magnetic-free region.

With reference to a diagram of the cross section of the second magnet ring 600, both a direction of a magnetic line inside the sixth sub-magnet ring 610 located at the outer side and a direction of a magnetic line inside the seventh sub-magnet ring 620 located at the inner side are parallel to an axial direction of the second magnet ring 600. The direction of the magnetic line inside the sixth sub-magnet ring 610 is opposite to the direction of the magnetic line inside the seventh sub-magnet ring 620. Specifically, an S pole of the sixth sub-magnet ring 610 is disposed close to an N pole of the first sub-magnet ring, an N pole of the sixth sub-magnet ring 610 is disposed far away from the N pole of the first sub-magnet ring, an N pole of the seventh sub-magnet ring 620 is disposed close to an S pole of the second sub-magnet ring, and an S pole of the seventh sub-magnet ring 620 is disposed far away from the S pole of the second sub-magnet ring.

To enable more magnetic lines between the first magnet ring 500 and the second magnet ring 600 to be used to increase an interaction force between the two magnet rings, in some examples, a shape of the first magnet ring 500 may match a shape of the second magnet ring 600. Specifically, a distance R1 between a ring center O1 of the first magnet ring 500 and a central line of the cross section of the magnet ring and a distance R2 between a ring center O2 of the second magnet ring 600 and a central line of the cross section of the magnet ring should be basically equal. In other words, a difference δ between R1 and R2 should be less than a preset threshold.

A matching relationship between the shape of the first magnet ring 500 and the shape of the second magnet ring 600 may also be understood as that the two cross sections of the first magnet ring 500 and the second magnet ring 600 at a same location are axisymmetric about a same straight line. In other words, the center lines of the two cross sections overlap.

D1 and D2 respectively indicate a width of the first magnet ring 500 and a width of the second magnet ring 600. In some examples, D2≥D1. Because both the magnetic line inside the first sub-magnet ring and the magnetic line inside the second sub-magnet ring are obliquely disposed, the wider second magnet ring 600 helps enable more magnetic lines emitted by the first magnet ring 500 to enter the second magnet ring 600, and also helps enable more magnetic lines emitted by the second magnet ring 600 to enter the first magnet ring 500, thereby helping increase the interaction force between the first magnet ring 500 and the second magnet ring 600.

In some examples, the width of the second magnet ring 600 may be determined based on the included angle α1 between the direction of the magnetic line inside the first sub-magnet ring and the axial direction of the first magnet ring 500 and the included angle α2 between the direction of the magnetic line inside the second sub-magnet ring and the axial direction of the first magnet ring 500. For larger α1 and/or α2, the second magnet ring 600 may be provided with a larger magnet ring width, thereby helping enhance the interaction force between the two magnet rings.

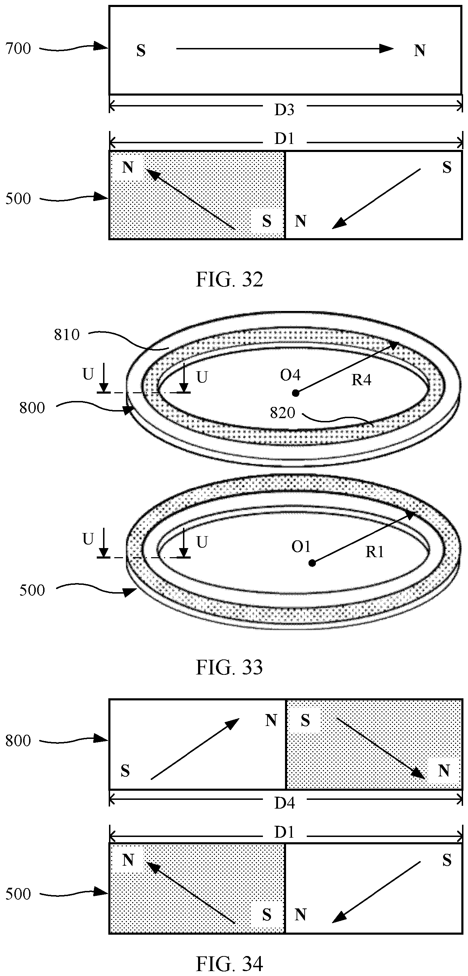

FIG. 31 and FIG. 32 are respectively a diagram of another structure of a third magnet ring 700 coupled to the first magnet ring 500 and a diagram of a radial cross section thereof. A direction of a magnetic line inside the third magnet ring 700 is a radial direction of the third magnet ring 700. In other words, the direction of the magnetic line inside the third magnet ring 700 is perpendicular to a normal direction of a plane on which the third magnet ring 700 is located.

For a case in which the third magnet ring 700 and the first magnet ring 500 generate a mutual attraction force, an S pole in the third magnet ring 700 may be disposed close to an N pole of the first sub-magnet ring, and an N pole in the third magnet ring 700 may be disposed close to an S pole of the second sub-magnet ring. As shown in FIG. 34, the S pole in the third magnet ring 700 may be located on an outer side of the third magnet ring 700, and the N pole in the third magnet ring 700 may be located on an inner side of the third magnet ring 700.

To enable more magnetic lines between the first magnet ring 500 and the third magnet ring 700 to be used to increase an interaction force between the two magnet rings, in some examples, a shape of the first magnet ring 500 may match a shape of the third magnet ring 700. Specifically, a distance R1 between a ring center O1 of the first magnet ring 500 and a central line of the cross section of the magnet ring and a distance R3 between a ring center O3 of the third magnet ring 700 and a central line of the cross section of the magnet ring should be basically equal. In other words, a difference δ between R1 and R3 should be less than a preset threshold.

A matching relationship between the shape of the first magnet ring 500 and the shape of the third magnet ring 700 may also be understood as that the two cross sections of the first magnet ring 500 and the third magnet ring 700 at a same location are axisymmetric about a same straight line. In other words, the center lines of the two cross sections overlap.

FIG. 32 is a diagram of a radial QQ cross section of the third magnet ring 700. D1 and D3 respectively indicate a width of the first magnet ring 500 and a width of the third magnet ring 700. In some examples, D3≥D1. Because both the magnetic line inside the first sub-magnet ring and the magnetic line inside the second sub-magnet ring are obliquely disposed, the wider third magnet ring 700 helps enable more magnetic lines emitted by the first magnet ring 500 to enter the third magnet ring 700, and also helps enable more magnetic lines emitted by the third magnet ring 700 to enter the first magnet ring 500, thereby helping increase the interaction force between the first magnet ring 500 and the third magnet ring 700.

In some examples, the width of the third magnet ring 700 may be determined based on the included angle α1 between the direction of the magnetic line inside the first sub-magnet ring and the axial direction of the first magnet ring 500 and the included angle α2 between the direction of the magnetic line inside the second sub-magnet ring and the axial direction of the first magnet ring 500. For larger α1 and/or α2, the third magnet ring 700 may be provided with a larger magnet ring width, thereby helping enhance the interaction force between the two magnet rings.

FIG. 33 and FIG. 34 are respectively a diagram of still another structure of a fourth magnet ring 800 coupled to the first magnet ring 500 and a diagram of a radial cross section thereof. The structure of the fourth magnet ring 800 is similar to the structure of the first magnet ring 500.

The fourth magnet ring 800 includes an eighth sub-magnet ring 810 and a ninth sub-magnet ring 820. The eighth sub-magnet ring 810 is located on an outer side of the ninth sub-magnet ring 820, and an inner wall of the eighth sub-magnet ring 800 may be in contact with an outer wall of the ninth sub-magnet ring 900. In other words, an inner diameter of the eighth sub-magnet ring 800 is basically equal to an outer diameter of the ninth sub-magnet ring 900.

With reference to the diagram of the cross section of the fourth magnet ring 800 in FIG. 34, a direction of a magnetic line inside the eighth sub-magnet ring 810 is inclined toward a normal direction of a plane on which the fourth magnet ring 800 is located, and a direction of a magnetic line inside the ninth sub-magnet ring 820 is inclined toward a normal direction of the plane on which the fourth magnet ring 800 is located. An S pole in the eighth sub-magnet ring 810 is disposed close to the N pole of the first sub-magnet ring, an N pole in the ninth sub-magnet ring 820 is disposed close to the S pole of the second sub-magnet ring, and an N pole of the eighth sub-magnet ring 810 is disposed close to an S pole of the ninth sub-magnet ring 820.

A structure of the eighth sub-magnet ring 810 and a structure of the ninth sub-magnet ring 820 are similar to the structures of the first sub-magnet ring and the second sub-magnet ring. For detailed descriptions, refer to related content in FIG. 29 and FIG. 30. For brevity, details are not described herein again.

To enable more magnetic lines between the first magnet ring 500 and the fourth magnet ring 800 to be used to increase an interaction force between the two magnet rings, in some examples, a shape of the first magnet ring 500 may match a shape of the fourth magnet ring 800. Specifically, a distance R1 between a ring center O1 of the first magnet ring 500 and a central line of the cross section of the magnet ring and a distance R4 between a ring center O4 of the fourth magnet ring 800 and a central line of the cross section of the magnet ring should be basically equal. In other words, a difference δ between R1 and R4 should be less than a preset threshold.

A matching relationship between the shape of the first magnet ring 500 and the shape of the fourth magnet ring 800 may also be understood as that the two cross sections of the first magnet ring 500 and the fourth magnet ring 800 at a same location are axisymmetric about a same straight line. In other words, the center lines of the two cross sections overlap.

FIG. 34 is the diagram of a radial UU cross section of the fourth magnet ring 800. Because the directions of the magnetic lines inside the first sub-magnet ring, the second sub-magnet ring, the eighth sub-magnet ring 810, and the ninth sub-magnet ring 820 are all obliquely disposed, to increase the interaction force between the first magnet ring 500 and the fourth magnet ring 800, the width of the first magnet ring 500 and a width of the fourth magnet ring 800 should be as equal as possible. In other words, D5 and D6 respectively indicate the width of the first magnet ring 500 and the width of the fourth magnet ring 800. In some examples, D5=D6. In some examples, |[D5-D6|≤τ, where τ≥0. It should be understood that, a smaller value of τ indicates that the widths of the two magnet rings are closer, and when volumes of the two magnet rings interacting with each other are fixed, the interaction force between the two magnet rings is stronger.

Similar to the disposing the backplane on a same face of two sub-magnets of the first magnet, a backplane may also be disposed on a connection face on another side opposite to the working faces of the first sub-magnet ring and the second sub-magnet ring in the first magnet ring 500. The backplane may be made of a material whose magnetic permeability is greater than the preset threshold, for example, a ferro-magnetic material or a soft magnetic material.

Disposing a backplane structure can relatively fasten two sub-magnet rings located inside a same magnet ring, and can enable magnetic lines between the two sub-magnet rings to be closed by using a backplane structure with good magnetic conductivity, thereby helping improve magnetic line density emitted by the first magnet ring 500, and helping increase interaction forces between the first magnet ring 500 and the second magnet ring, the third magnet ring, or the fourth magnet ring.

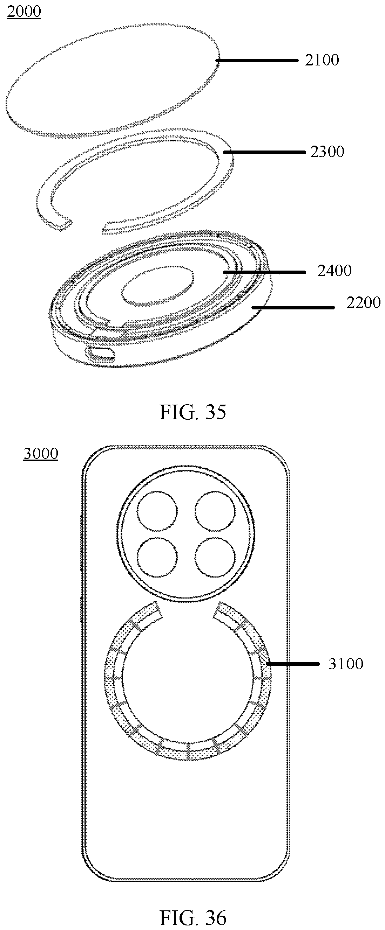

The first magnet ring 500 provided in embodiments of this application is applicable to different application scenarios. FIG. 35 and FIG. 36 provide two application methods of the first magnet ring 500 as examples. It should be understood that the first magnet ring 500 may be further applied to a scenario other than FIG. 35 and FIG. 36, for example, a magnetic protective case of an electronic device or a magnetic mobile power pack. This is not limited in this application.

FIG. 35 shows a wireless charging cradle 2000 according to an embodiment of this application. The wireless charging cradle 2000 may include a cover 2100 and a housing 2200. The cover 2100 may cover the housing 2200. The cover 2100 and the housing 2200 may enclose accommodation space. The accommodation space may accommodate a first connection ring 2300 and a charging coil 2400 of the wireless charging cradle 2000. The first connection ring 2300 may be any first magnet ring provided above. The charging coil 2400 is disposed inside a region enclosed by the first connection ring 2300, and the charging coil 2400 is further connected to a circuit board in the wireless charging cradle 2000. The circuit board is disposed outside the region enclosed by the first connection ring 2300. In some examples, a notch may be disposed in the first connection ring 2300, and an interconnection line connecting the charging coil 2400 and the circuit board may connect the charging coil 2400 inside the first connection ring to the circuit board outside the first connection ring 2300 through the notch.

The first connection ring 2300 in the wireless charging cradle 2000 may fit with a coupled connection ring installed on an electronic device. There may be a mutual magnetic attraction force between the first connection ring 230 and the coupled connection ring. When the electronic device is placed on the wireless charging cradle 2000 (for example, on the cover 2100), the mutual attraction force between the first connection ring 2300 and the coupled connection ring on the electronic device may attract the electronic device to the wireless charging cradle 2000. Therefore, it is difficult for the electronic device to slip from the wireless charging cradle 2000 in a wireless charging process, and reliability and stability of a wireless charging function of the electronic device are improved.

FIG. 36 shows an electronic device 3000 according to an embodiment of this application. A second connection ring 3100 is disposed inside the electronic device 3000, and the second connection ring 3100 may be attached to a face that is of a rear cover of the electronic device 3000 and that faces the inside of the electronic device 3000. The second connection ring 3100 may be any first magnet ring provided in the foregoing embodiments.

In some examples, the second connection ring 3100 and a coupled connection ring in an accessory of the electronic device 3000, such as a protective housing, a bracket, and a charging cradle of the electronic device 3000, may generate a mutual attraction force. When the electronic device 3000 is close to one or more of the foregoing accessories, the mutual attraction force between the second connection ring 3100 and the coupled connection ring may be used to relatively fasten the electronic device 3000 and the accessory.

In some examples, the electronic device 3000 supports a wireless charging function, a wireless charging coil is further accommodated inside the electronic device 3000, and the wireless charging coil is electrically connected to a mainboard in the electronic device. The wireless charging coil may be located in a region enclosed by the second connection ring 3100, a circuit board of the electronic device is located outside the region enclosed by the second connection ring 3100, a notch may be disposed in the second connection ring 3100, and an interconnection line between the wireless charging coil and the circuit board may pass through the notch disposed in the second connection ring 3100.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and other variants thereof all mean "include but is not limited to", unless otherwise specifically emphasized in another manner.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A magnet, comprising: a plurality of magnet units, wherein the plurality of magnet units are arranged in a ring shape, the magnet unit comprises a first magnet subunit and a second magnet subunit, the first magnet subunit and the second magnet subunit are relatively fastened, a first magnetic pole of the first magnet subunit is adjacent to a second magnetic pole of the second magnet subunit, the first magnetic pole and the second magnetic pole are opposite, and both the first magnetic pole and the second magnetic pole are disposed close to a same face of the magnet; and
a direction of a magnetic line inside the first magnet subunit is inclined toward a plane on which the magnet is located, and a direction of a magnetic line inside the second magnet subunit is inclined toward the plane on which the magnet is located.

2. The magnet according to claim 1, wherein an included angle between the direction of the magnetic line inside the first magnet subunit and the plane on which the magnet is located is α, and an included angle between the direction of the magnetic line inside the second magnet subunit and the plane on which the magnet is located is β; and 30≤α<90°, and 30≤β<90°.

3. The magnet according to claim 2, wherein α=β.

4. The magnet according to any one of claims 1 to 3, wherein the first magnet subunit comprises a first contact face and a first exposed face that are oppositely disposed, the second magnet subunit comprises a second contact face and a second exposed face that are oppositely disposed, the first contact face and the second contact face are adjacently disposed, the first exposed face is disposed away from the second contact face, and the second exposed face is disposed away from the first contact face; and
a distance between the first contact face and the first exposed face is equal to a distance between the second contact face and the second exposed face.

5. The magnet according to any one of claims 1 to 4, wherein the magnet unit is of a non-mirror-symmetrical structure.

6. The magnet according to claim 5, wherein the magnet unit comprises a connection wall, two connection walls of two adjacent magnet units in the plurality of magnet units are adjacent, the connection wall comprises a first connection wall and a second connection wall that are oppositely disposed, and a first end of the first connection wall is provided with a first reverse angle.

7. The magnet according to claim 6, wherein a second end of the first connection wall is provided with a second reverse angle, or a second end of the second connection wall is provided with a second reverse angle; and
the first end and the second end are two ends of the magnet unit that are oppositely disposed.

8. The magnet according to any one of claims 5 to 7, wherein the magnet unit comprises the connection wall, two connection walls of two adjacent magnet units in the plurality of magnet units are adjacent, the connection wall comprises the first connection wall and the second connection wall that are oppositely disposed, and a plane on which the first connection wall is located intersects a plane on which the second connection wall is located.

9. The magnet according to any one of claims 1 to 8, wherein a spacing is disposed between at least two adjacent magnet units in the plurality of magnet units.

10. The magnet according to any one of claims 1 to 9, wherein the magnet further comprises a spacing unit, the spacing unit is located between two adjacent magnet units, and a magnetic line direction of the spacing unit and a magnetic line direction of the magnet unit at a same side of the magnet are different.

11. The magnet according to any one of claims 1 to 10, wherein the magnet further comprises a backplane, the first magnetic pole and the second magnetic pole are disposed close to a connection face of the magnet, the backplane is fastened to the connection face, and the backplane is made of a material whose magnetic permeability is greater than a preset threshold.

12. A magnet, wherein the magnet is in a ring shape, the magnet comprises a first sub-magnet and a second sub-magnet that are in a ring shape, the first sub-magnet is sleeved on an outer side of the second sub-magnet, the first sub-magnet and the second sub-magnet are relatively fastened, a first magnetic pole of the first sub-magnet is adjacent to a second magnetic pole of the second sub-magnet, the first magnetic pole and the second magnetic pole are opposite, and both the first magnetic pole and the second magnetic pole are disposed close to a same face of the magnet; and
a direction of a magnetic line inside the first sub-magnet is inclined toward a plane on which the magnet is located, and a direction of a magnetic line inside the second sub-magnet is inclined toward the plane on which the magnet is located.

13. The magnet according to claim 12, wherein an included angle between the direction of the magnetic line inside the first sub-magnet and the plane on which the magnet is located is α, and an included angle between the direction of the magnetic line inside the second sub-magnet and the plane on which the magnet is located is β; and
30≤α<90°, and 30≤β<90°.

14. The magnet according to claim 13, wherein α=β.

15. The magnet according to any one of claims 12 to 14, wherein a width of the first sub-magnet is equal to a width of the second sub-magnet.

16. The magnet according to any one of claims 12 to 15, wherein the magnet comprises at least one notch.

17. The magnet according to any one of claims 12 to 16, wherein the magnet ring comprises a plurality of first magnetic portions and a plurality of second magnetic portions that are spaced apart, and a magnetic line direction of the first magnetic portion and a magnetic line direction of the second magnetic portion at a same side of the magnet are different.

18. The magnet according to any one of claims 12 to 17, wherein the magnet further comprises a backplane, the first magnetic pole and the second magnetic pole are disposed close to a connection face of the magnet, the backplane is fastened to the connection face, and the backplane is made of a material whose magnetic permeability is greater than a preset threshold.

19. An electronic device, comprising a charging coil, a mainboard, and the magnet according to any one of claims 1 to 11 or claims 12 to 18, wherein the charging coil is located in a region enclosed by the magnet, and the charging coil is electrically connected to the mainboard.

20. A charging device, comprising a charging coil, a circuit board, and the magnet according to any one of claims 1 to 11 or claims 12 to 18, wherein the charging coil is located in a region enclosed by the magnet, and the charging coil is electrically connected to the circuit board.
